Europäisches Patentamt

European Patent Office

Office européen des brevets

(19)

(11) Numéro de publication: **0 404 616**
**A1**

(12) **DEMANDE DE BREVET EUROPEEN**

(21) Numéro de dépôt: 90401444.6

(22) Date de dépôt: 30.05.90

(51) Int. Cl.⁵: **E05D 15/52, B23P 21/00**

(30) Priorité: 21.06.89 FR 8908291

(43) Date de publication de la demande:
27.12.90 Bulletin 90/52

(84) Etats contractants désignés:
AT BE CH DE DK ES GB GR IT LI NL SE

(71) Demandeur: FERCO INTERNATIONAL Usine
de Ferrures de Bâtiment Société à
responsabilité limitée
2, rue du Vieux-Moulin Reding
F-57400 Sarrebourg(FR)

(72) Inventeur: Kautt, Jean-Jacques
24, rue Pertois
F-67100 Strasbourg(FR)

(74) Mandataire: Rodhain, Claude et al
Cabinet Claude Rodhain 30, rue la Boétie
F-75008 Paris(FR)

(54) **Installation pour l'assemblage automatique de la douille-équerre inférieure d'ouvrants.**

(57) L'invention consiste en une installation pour l'assemblage automatique de la douille-équerre inférieure d'ouvrants, c'est-à-dire de la partie de ferrure destinée à être fixée sur l'angle inférieur d'un ouvrant de préférence oscillo-battant, au droit de son axe de rotation vertical et à transmettre le poids du battant à un palier encastré dans le dormant.

L'installation automatique est essentiellement constituée d'une installation d'équipement 100 de la douille, constituée de postes de travail disposés autour d'un plateau tournant et d'une installation d'assemblage automatique 200 de l'équerre sur la douille constituée de postes de travail disposés selon un plan de référence P-P. Ces deux installations 100 et 200 sont associées par l'intermédiaire d'un mécanisme de transfert automatique 30.

L'invention permet l'équipement et l'assemblage de douilles-équerre, de façon complètement automatique, toutes les opérations s'enchaînant selon un flux continu.

FIG.2

L'invention concerne une installation pour l'assemblage automatique de la douille-équerre inférieure d'ouvrants.

Cette partie de ferrure est destinée à être fixée sur l'angle inférieur d'un ouvrant au droit de son axe de rotation.

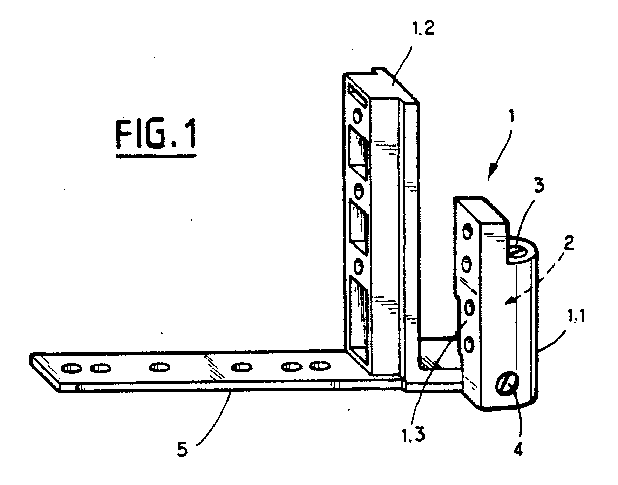

Afin de mieux comprendre l'objet de l'invention, cette douille-équerre inférieure est représentée sur la figure 1.

Elle comporte une première partie 1 comportant la douille 1.1 formant la partie d'articulation de l'ouvrant. Cette douille 1.1 est destinée à coopérer avec une pièce couramment appelée support d'angle, fixée quant à elle sur le dormant, et comportant un axe d'articulation logé par le dessous, dans la douille 1.1, lors du montage de l'ouvrant sur le dormant.

Dans le cas de châssis oscillo-battant, cet axe d'articulation permet d'une part le pivotement à la française de l'ouvrant par rapport à un axe vertical et d'autre part il peut lui-même pivoter par rapport à un axe horizontal pour permettre l'ouverture en abattant de l'ouvrant.

Sur l'extrémité de cet axe du support d'angle s'appuie l'ouvrant par l'intermédiaire de la douille. Cet appui doit assurer un mouvement de rotation très doux. Pour ce faire, l'extrémité de l'axe est sphérique et il est prévu au fond de l'orifice cylindrique de la douille une butée ou tampon 2 en matière plastique qui facilite la rotation de l'axe et empêche le grippage de la douille et de l'axe lors du pivotement de l'ouvrant.

Par ailleurs, sont prévues sur la douille 1.1, deux vis de réglage 3 et 4. La première vis de réglage 3 appelée vis de réglage supérieure ci-après, permet le réglage vertical de l'ouvrant, une fois posé sur le dormant. La seconde vis 4, appelée vis de réglage latéral ci-après, permet quant à elle le réglage horizontal et transversal au plan du châssis du dormant. En général, une troisième vis de réglage est prévue sur le support d'angle permettant le réglage horizontal et parallèle au plan du châssis.

Le palier du support d'angle est foré ou fraisé à l'aide d'un gabarit dans le dormant. La stabilité de l'ouvrant est ainsi assurée. Tout affaissement est pratiquement impossible, même en cas de forte charge car le poids du vantail est appliqué à l'équerre formée d'une seconde partie 1.2 de la partie 1 formant le bras vertical de l'équerre et par une pièce rapportée 5, elle-même en forme d'équerre, formant le bras horizontal, cette équerre (1.2, 5) étant logée dans une feuillure de l'ouvrant. Le poids du vantail est donc transmis au palier encastré dans son logement. Cette équerre d'acier 5 est fixée, comme représentée sur la figure 1, sur l'élément 1 par rivetage à la surface inférieure de l'élément 1 et à sa surface 1.3.

Pour plus de clarté, l'élément 1 sera appelé douille de façon générique dans la suite.

L'objet de l'invention est de proposer une chaîne d'assemblage totalement automatique de telle douille-équerre, en particulier destinée aux châssis oscillo-battants.

Il est connu d'assembler les différentes pièces de l'élément 1 grâce à une machine automatique. Celle-ci comporte, en général, un plateau tournant autour duquel sont disposés les postes de travail qui permettent la mise en place d'une ou des vis de réglage sur la douille.

L'équerre 5 est ensuite généralement assemblée sur l'élément 1 de façon traditionnelle sur une presse par rivetage en deux passes, l'une dans un sens l'autre dans un sens perpendiculaire au premier.

Ces opérations successives de montage entraîne en raison de leur caractère manuel, un coût de production élevé du fait des multiples manipulations et temps morts dûs à la reprise, au positionnement et à l'assemblage des pièces. De surcroît, les temps de montage étant inhérents au savoir faire et à la dextérité de l'opérateur, on observe de fortes variations dans les cycles et qualités de fabrication, ce qui nuit à la rentabilité et à la productivité. En fait, l'opérateur doit prélever deux premières pièces élémentaires dans des réceptacles (où elles sont placées en vrac par catégorie) les assembler à la main, puis les introduire dans un poste de rivetage pour réaliser leur jonction, en contrôler ensuite la bonne exécution.

Ces manipulations sont longues et fastidieuses en raison de leur répétitivité et entraînent rapidement des baisses sensibles de rendement.

L'invention a donc pour but de remédier à ces divers inconvénients et concerne à cet effet une installation d'assemblage automatisant totalement ces différentes opérations et prévoyant de plus la mise en place automatique de la butée 2 lors du montage automatique des différentes pièces de la douille 1.

Outre les opérations déjà automatisées dans les installations existantes, l'invention permet donc la pose automatique de la butée en matière plastique de la douille et le rivetage automatique de l'équerre d'angle, toutes les opérations s'enchaînant selon un flux continu.

Pour ce faire, l'installation pour l'équipement et l'assemblage automatique de pièces élémentaires, en particulier de pièces constituant une douille-équerre, composée d'une douille d'articulation pourvue de deux vis de réglage, horizontale et verticale et d'une butée en matière plastique, et d'une équerre, ces deux pièces assemblées formant une équerre destinée à être logée dans une feuillure de l'ouvrant, notamment oscillo-battant, la douille étant destinée à coopérer avec un support d'angle fixé sur le dormant comprend une installation d'équipement automatique de la douille comprenant un plateau tournant pas-à-pas présentant la douille à un poste de distribution et de mise en place de la vis de réglage supérieure, un poste de distribution et de mise en place de la vis de réglage latérale, un poste de contrôle de la mise en place des deux vis de réglage ; cette installation est remarquable en ce qu'à cette installation d'équipement de la douille est associée une installation d'assemblage automatique de l'équerre sur la douille, par l'intermédiaire d'un mécanisme de transfert automatique.

Une autre caractéristique importante de l'invention réside dans le fait que l'installation d'équipement automatique de la douille comprend un poste de mise en place de la butée en matière plastique.

L'invention est exposée ci-après plus en détail à l'aide de dessins représentant seulement un mode d'exécution.

- la figure 2 est une vue globale de dessus de la chaîne d'assemblage conforme à l'invention,

- la figure 3 est une vue partielle de dessus à plus grande échelle de la chaîne d'assemblage représentant plus précisément l'installation d'équipement de la douille,

- les figures 4A et 4B sont des vues en coupe A-A et B-B selon la figure 3,

- les figures 5A et 5B sont des vues partielles en élévation et de dessus, à plus grande échelle de la chaîne d'assemblage, représentant plus précisément l'installation d'assemblage automatique de la douille et de l'équerre.

- la figure 6A est une vue en coupe selon C-C de la platine support de l'installation d'équipement de la douille et la figure 6B, une vue de dessus de cette platine support avec une douille déposée,

- les figure 7A et 7B sont des vues, en coupe selon D-D et de dessus, d'une platine support de l'installation d'assemblage de la douille et de l'équerre, avec ces pièces selon un premier agencement,

- les figures 8A et 8B sont des vues, en coupe selon D-D et de dessus, d'une platine support avec les pièces selon un second agencement.

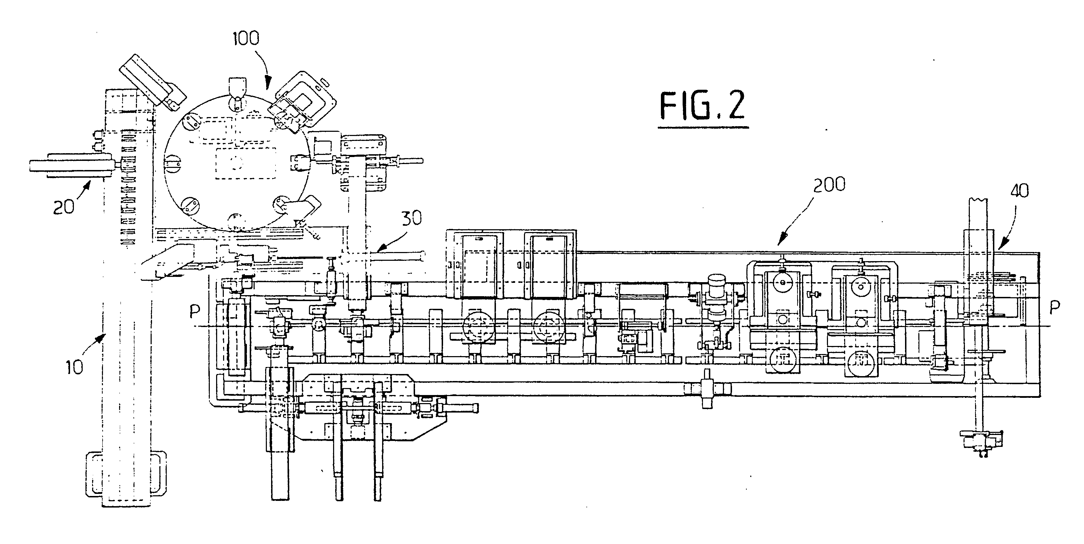

La figure 2 représente une vue générale de dessus de l'installation. Elle comporte en amont, un convoyeur de chargement 10 constitué de façon classique d'un tapis ou bande sans fin et amenant les douilles 1, quelque soit leur modèle et indifféremment droites ou gauches au niveau d'un manipulateur de chargement 20 qui charge ces douilles 1 sur le plateau tournant de l'installation d'équipement automatique 100.

Cette installation d'équipement 100 est constituée d'un plateau tournant autour duquel sont disposés les postes d'assemblage des pièces 2, 3, 4 sur la douille 1. A la sortie de cette installation d'équipement 100 est disposé un poste de transfert 30 grâce auquel sont évacuées les pièces défectueuses et transférer les pièces correctes à l'installation d'assemblage automatique 200. Pour ce faire le poste de transfert 30 réalise une rotation verticale de 180° soit un retournement des douilles, puis leur pivotement horizontal de 90°.

L'installation d'assemblage automatique 200 de l'équerre 5 sur la douille 1 est constituée de postes de travail modulaires disposés selon un plan de référence PP et destinée à réaliser l'assemblage de l'équerre 5 sur la douille équipée 1. Elle se termine en aval par un poste d'évacuation 40 qui transfère les pièces correctes et évacue les pièces défectueuses.

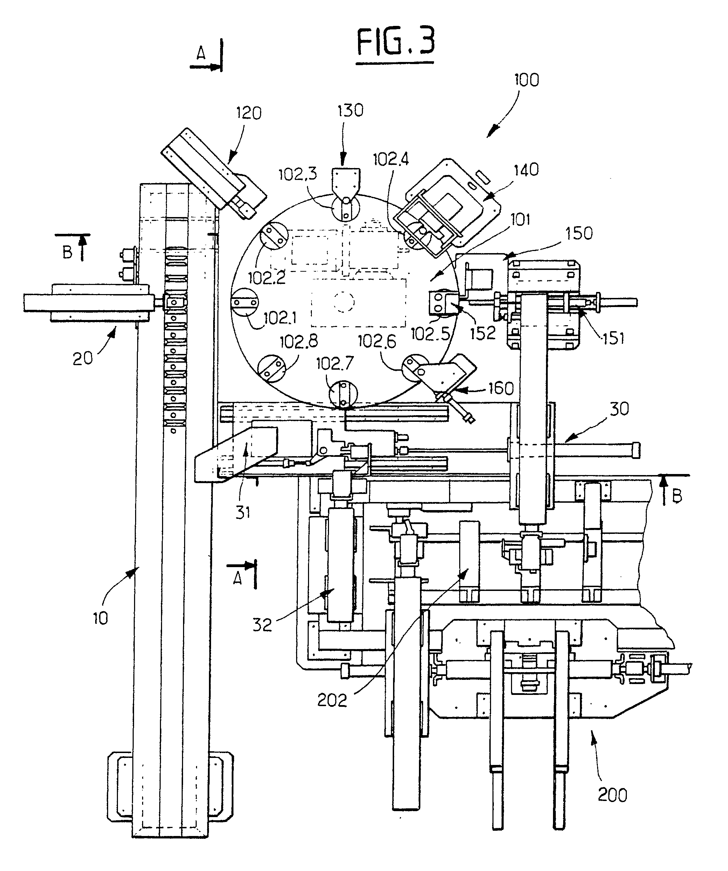

La figure 3 représente plus en détail à plus grande échelle le convoyeur de chargement 10 et l'installation d'équipement automatique de la douille 100.

Le manipulateur de chargement 20 constitué de préférence d'un organe de préhension disposé sur la tige d'un vérin horizontal charge la douille 1 sur une platine support 102 disposée sur le plateau tournant 101. Cette platine support 102 est pourvue d'éléments de positionnement qui sont doubles afin de permettre indifféremment le chargement d'une douille droite ou d'une douille gauche. Au total le plateau tournant 101 est pourvu de huit platines supports réparties sur sa périphérie.

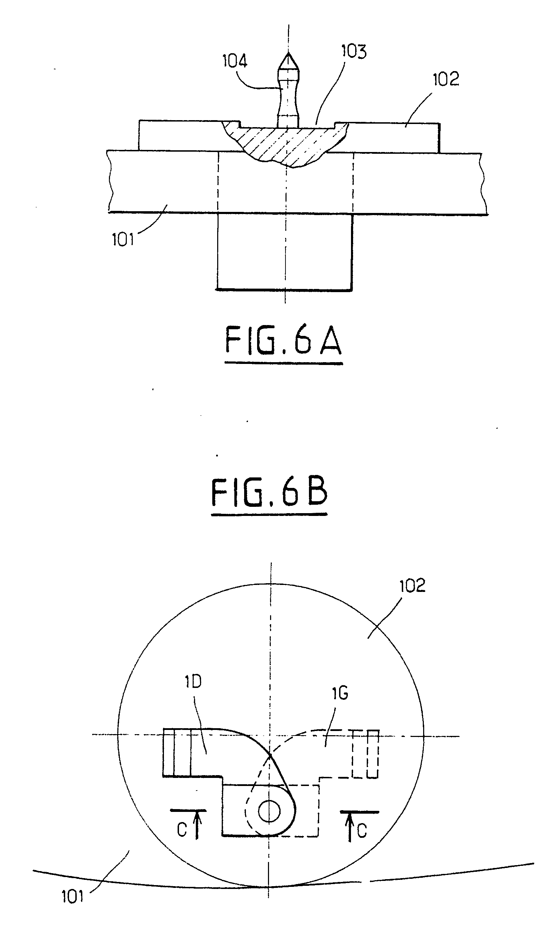

Les figures 6A et 6B représentent plus en détail une platine 102.

La platine présente une surface de dépose circulaire et comporte une gorge 103 et un tenon 104. Ce dernier est destiné à être introduit dans la douille 1 par le bas. La gorge 103, quant à elle, est agencée pour recevoir soit une douille droite 1D, soit une douille gauche 1G. Elle reçoit plus précisément la partie la plus basse de la douille, de niveau inférieur à la partie en L de la douille (1) qui est destiné à recevoir l'équerre (5).

Le plateau tournant 101 est commandé pour effectuer une rotation pas-à-pas de chacune des huit positions 102.i à la suivante, c'est-à-dire selon un pas d'un huitième de tour. Pour ce faire, est prévu un mécanisme d'entraînement sous le plateau.

L'équipement automatique d'une douille 1 s'effectue de la façon suivante.

Le manipulateur de chargement 20 charge une douille 1 sur une platine 102 dans la position 102.1. Le plateau effectue un huitième de tour pour venir en position 102.2.

A cette position, la douille est amenée à un poste de mise en place 120 de la butée en matière plastique 2. Cette butée 2 est pourvue d'un ergot permettant sa retenue dans le trou cylindrique de la douille 1. Le poste de mise en place de la butée 120 comprend un bol de stockage des butées, à la sortie duquel est disposé un dispositif de positionnement de la butée. Une pince à translation verticale introduit la butée positionnée dans le trou cylindrique de la douille.

Après un huitième de tour du plateau tournant 101, la douille vient en position 102.3. Là est disposé un poste de contrôle de la mise en place de la butée 130 constitué de préférence d'un palpeur mécanique vérifiant la présence et la bonne position de la butée, grâce à un doigt commandé par un vérin et pourvu de repères. Le plateau tournant 101 effectue alors un autre huitième de tour.

La douille toujours disposée sur sa platine support 102 arrive alors en position 102.4. Elle est alors prête à être traitée par un poste de distribution et de mise en place 140 de la vis supérieure 3. Ce poste comporte un dispositif de stockage des vis supérieures 3, un dispositif de préhension, de positionnement et de vissage automatique, à tête de vissage verticale.

Le plateau effectue ensuite un huitième de tour pour que la douille vienne en position 102.5 et soit soumise à un poste de distribution et de mise en place 150 de la vis de réglage latérale 4. Ce poste est de constitution équivalente au poste 140, avec une tête de vissage horizontal. Au dispositif de vissage 151 en soi, est associé un dispositif de bridage 152 à déplacement vertical et venant maintenir la douille 1 en place sur la platine 102. Par ailleurs, la tête de vissage horizontale est déplaçable horizontalement et perpendiculairement au sens du vissage, pour pouvoir mettre en place et visser la vis de réglage latérale 4 d'une douille droite 1D ou d'une douille gauche 1G.

Par un huitième de tour du plateau, la douille en position 102.6 arrive à un poste de contrôle de la mise en place 160 des deux vis de réglage 3 et 4 constitué essentiellement de deux palpeurs, horizontal et vertical, analogues à celui du poste 130.

Enfin la platine support 102 pourvue de la douille équipée est amenée en position 102.7 où elle est soumise au poste de transfert 30 afin d'être transférée à l'installation automatique d'assemblage de l'équerre. Au niveau de ce mécanisme de transfert 30 est prévue une goulotte d'évacuation des pièces défectueuses 31 représentée sur la figure 3 en position de retrait. Si une pièce défectueuse a été repérée par les postes de contrôle, la goulotte 31 vient se positionner devant la position 102.7 et la pièce défectueuse y est évacuée. Le poste de transfert intermédiaire 30 comporte essentiellement un manipulateur de déchargement 32 pourvu d'un dispositif de préhension et de déplacement tel que la douille équipée est retournée verticalement de 180° puis pivotée horizontalement de 90° pour être mise en place sur une platine allongée 202 destinée à supporter les pièces le long de l'installation automatique d'assemblage 200. Ces platines 202 sont telles qu'un seul type de platine permet toutes les opérations de l'installation d'assemblage 200 quelque soit le type de douille et que la douille-équerre réalisée soit droite ou gauche.

La rotation d'un huitième de tour du plateau amène la platine 102 déchargée de sa pièce dans la position 102.8 qui est un poste libre.

Bien évidemment ces opérations s'effectuent de façon continue et automatique, tous les postes 20, 120 à 160, 30 étant en fonction à chaque rotation d'un huitième de tour du plateau tournant 101.

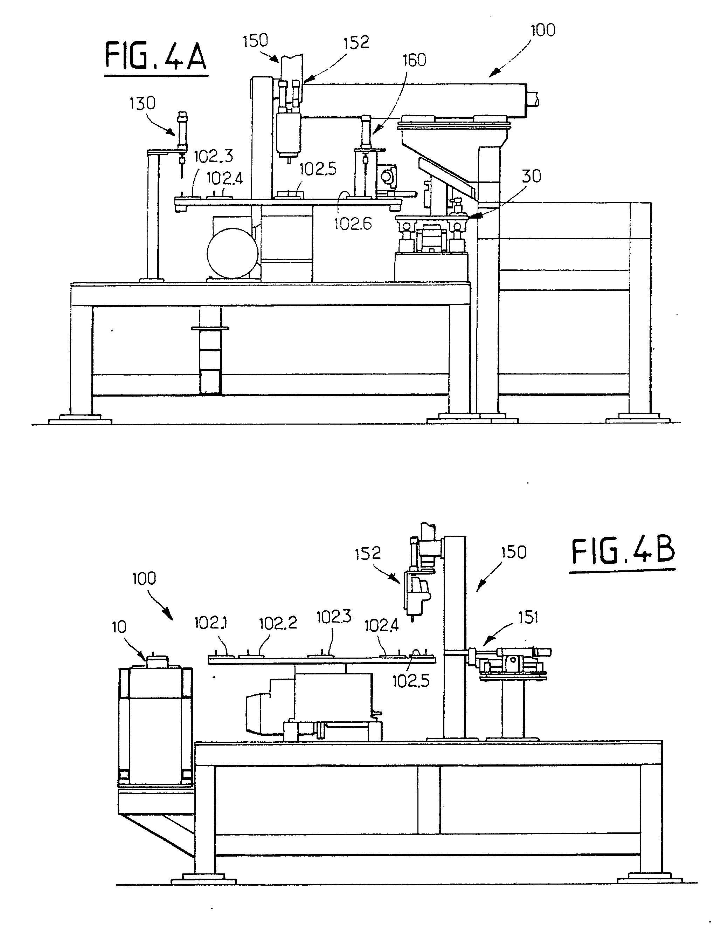

Les figures 4A et 4B représentent en coupe et partiellement pour plus de clarté cette installation d'équipement 100.

Sur ces figures, sont représentés principalement, le poste de contrôle 130 de la mise en place de la butée 2 en position 102.3 de la platine, le poste de distribution et de mise en place 150 de la vis de réglage latérale 4 en position 102.5 de la platine, le poste de contrôle de la mise en place 160 des deux vis de réglage 3 et 4 en position 102.6.

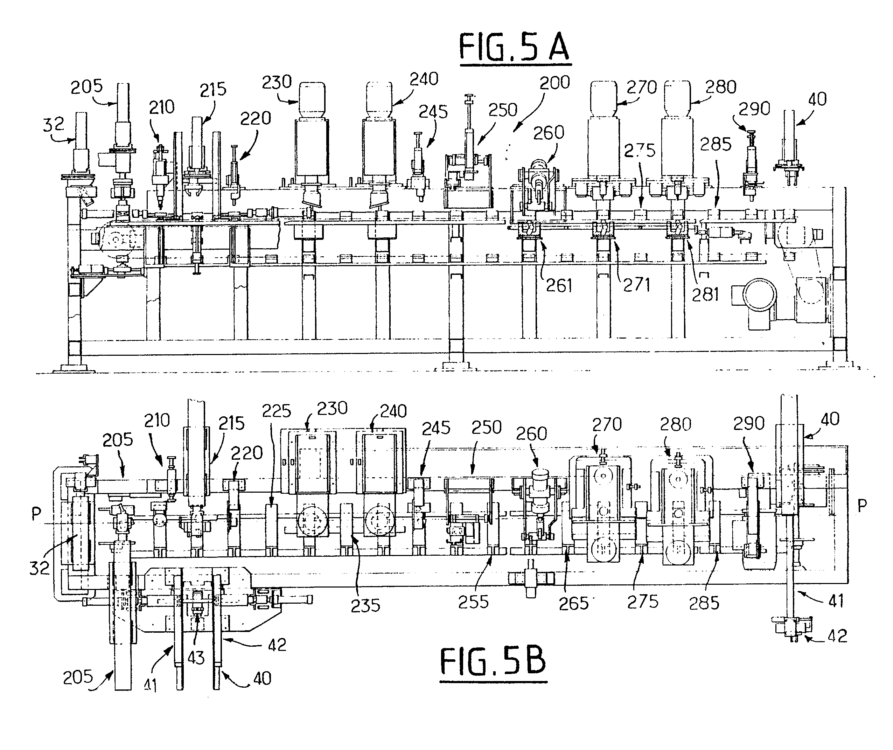

Les figures 5A et 5B représentent en élévation et en vue de dessus l'installation d'assemblage automatique de l'équerre 5 sur la douille équipée 1.

Cette installation 200 comporte plusieurs postes modulaires disposés selon un plan PP. Pour passer d'un poste à un autre, les pièces sont positionnées sur des platines supports 202 disposées sur un convoyeur du type à bande sans fin se déplaçant pas-à-pas d'un poste à l'autre.

Les platines supports 202 sont agencées pour permettre la dépose et l'assemblage de douilles 1 et d'équerres 5 droites ou gauches.

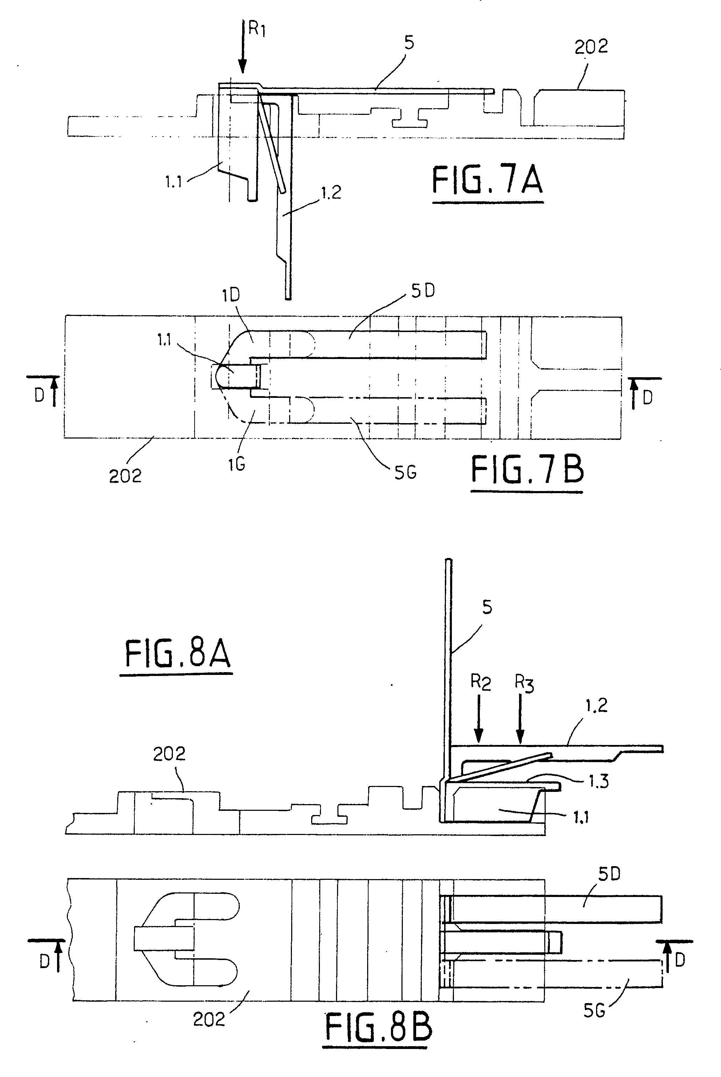

Tournée verticalement de 180°, et pivotée horizontalement grâce au dispositif de transfert 32, la douille 1 est déposée sur une platine support 202, à un poste de dépose 205 comme on peut le voir sur la figure 7A.

La figure 7B représente le positionnement de douilles et d'équerres, droite 1D, 5D ou gauche 1G, 5G. La partie de douille, en soi 1.1 est introduite dans une cavité transversalement centrale de la platine 202 et la partie 1.2 se positionne de l'un ou de l'autre côté de cette cavité centrale.

D'autres caractéristiques de la platine 202 apparaîtront, dans la suite, lors de la description du positionnement des pièces.

A la suite du poste de dépose 205, est disposé un poste de graissage 210.

Latéralement au plan de référence PP est alors disposé un poste de distribution 40 des équerres en acier 5. Ce poste de distribution 40 comporte deux chargeurs 41, 42, dont l'un est destiné au chargement des équerres droites et l'autre au chargement des équerres gauches. Entre ces deux chargeurs 41, 42 est disposé un tiroir central de distribution 43 en une unique position de sortie. L'équerre 5 est alors positionnée avec sa plus grande branche horizontale et sa plus courte branche verticale. Un poste de dépose 215 de l'équerre 5 sur la douille 1 est pourvu de pinces de préhension venant chercher l'équerre 5 dans le tiroir de distribution 43 et le déposant dans des gorges de la platine 202. Pour ce faire, ce poste de dépose est également pourvu de dispositifs de déplacement horizontal et vertical, en particulier de vérins.

L'équerre 5 est alors positionnée sur la douille 1 comme le représente la figure 7A.

Le poste suivant 220, est un poste de contrôle de la position de l'équerre acier 5 sur la douille 1, constitué de préférence de palpeurs.

La position suivante 225 de la platine est dépourvue de poste puis au déplacement suivant du convoyeur la platine arrive à un poste de rivetage 230 du premier rivet comprenant essentiellement une tête de rivetage à déplacement vertical.

Selon le pas suivant de déplacement, la position suivante 235 de la platine est dépourvue de poste et les pièces sont ensuite transmises à un poste de rivetage 240 du second rivet constitué de façon analogue au poste de rivetage 230.

Ces deux opérations de rivetage sont schématisées sur la figure 7A par la flèche R1. Deux postes de rivetage indépendants sont nécessaires car la distance entre les deux rivets est insuffisante pour réaliser un double rivetage simultané.

Le rivetage est alors vérifié grâce au poste de contrôle 245 puis les pièces sont retournées grâce au poste de retournement 250.

A ce dernier poste, les pièces sont pivotées horizontalement de 90° pour venir dans la position représentée sur la figure 8A, la platine comportant un second agencement de réception des pièces pivotées.

En passant par un poste libre 255 les pièces arrivent alors à un poste de décambrage 260 de l'équerre acier 5. Ce poste comprend un dispositif de pression assurant le contact de la plus courte branche de l'équerre 5 sur la surface 1.3 de la douille 1.

Après une position libre 265, les pièces sont amenées à un poste de premier rivetage 270 puis après un autre poste libre 275 à un poste de second rivetage 280. Ces deux postes de rivetage sont analogues et deux postes de rivetage indépendants sont nécessaires car la distance entre les deux rivets est insuffisante pour réaliser un double rivetage simultané.

Ces deux opérations de rivetage sont schématisées sur la figure 8A par les flèches R2 et R3.

Au niveau des postes de décambrage 260 et de rivetage 270, 280 peuvent être prévues des rehausses 261, 271, 281 destinées à mettre à niveau les platines et les pièces à travailler. Ces rehausses sont reliées par un dispositif commun d'élévation à déplacement horizontal commandé par un vérin, chaque rehausse étant déplacée verticalement grâce à un système de double biellette.

Après un poste libre 285, les rivetages sont vérifiés grâce à un poste de contrôle 290 comprenant des palpeurs vérifiant l'absence de différence de niveau.

Les douilles-équerres sont alors équipées et assemblées et sont évacuées grâce au poste d'évacuation 40 comprenant des pinces de préhension à déplacement vertical et horizontal, le déplacement horizontal se faisant à deux niveaux, un premier niveau 41 où sont évacuées les pièces défectueuses et un second niveau 42 où sont évacuées les pièces correctes.

De façon générale, dans toute l'installation, le contrôle de présence et de positionnement est double. Les postes de dépose et d'assemblage sont pourvus d'un dispositif de contrôle électrique ne transmettant l'information électrique que lorsque la pose et le montage sont réalisés correctement. A ce premier contrôle, s'ajoute un second contrôle réalisé par les postes de contrôle, eux-mêmes.

## Revendications

1) Installation pour l'équipement et l'assemblage automatique de pièces élémentaires, en particulier de pièces constituant une douille-équerre, composée d'une douille d'articulation, pourvue de deux vis de réglage, supérieure et latérale, et d'une butée en matière plastique, et d'une équerre, ces deux pièces assemblées formant une équerre destinée à être logée dans une feuillure d'un ouvrant, notamment oscillo-battant, la douille étant destinée à coopérer avec un support d'angle fixé sur le dormant, installation comprenant une installation d'équipement automatique de la douille pourvue d'un plateau tournant pas-à-pas présentant la douille à :
- un poste de distribution et de mise en place de la vis de réglage supérieure,
- un poste de distribution et de mise en place de la vis de réglage latérale,
- un poste de contrôle de la mise en place des deux vis de réglage,
caractérisée en ce qu'à cette installation d'équipement automatique (100) de la douille (1) est associée une installation d'assemblage automatique (200) de l'équerre (5) sur la douille (1), par l'intermédiaire d'un mécanisme de transfert automatique (30).

2) Installation selon la revendication 1, caractérisée en ce que l'installation d'équipement automatique (100) de la douille (1) comprend un poste de mise en place (120) de la butée (2).

3) Installation selon la revendication 2, caractérisée en ce que l'installation d'équipement automatique (100) comporte un poste de contrôle (130) de la mise en place de la butée (2).

4) Installation selon l'une quelconque des revendications précédentes, caractérisée en ce que l'installation d'équipement automatique (100) comprend d'amont en aval et dans cet ordre :
- un poste de chargement (20, 102.1),
- un poste de mise en place de la butée (120, 102.2),
- un poste de contrôle de la mise en place de la butée (130, 102.3),
- un poste de distribution et de mise en place de la vis de réglage supérieure (140, 102.4),
- un poste de distribution et de mise en place de la vis de réglage latérale (150, 102.5),
- un poste de contrôle de la mise en place des vis de réglage (160, 102.6),
- un poste de transfert intermédiaire (30, 102.7).

5) Installation selon la revendication 4, caractérisée en ce que le poste de transfert (30) est pourvu d'une goulotte mobile (31) pour l'évacuation des pièces défectueuses.

6) Installation selon l'une quelconque des revendications précédentes, caractérisée en ce que le plateau tournant (101) de l'installation d'équipement (100) de la douille (1) tourne dans un seul sens de rotation selon un pas de un huitième de tour, le plateau supportant huit platines supports (102).

7) Installation selon la revendication 6, caractérisée en ce que les platines supports (102) sont identiques et que chaque platine (102) est pourvue d'un tenon (104) et d'une gorge (103), permettant indifféremment le positionnement d'une douille droite ou d'une douille gauche.

8) Installation selon l'une quelconque des revendications précédentes, caractérisée en ce que l'installation d'assemblage automatique (200) de l'équerre (5) sur la douille (1) comprend des postes de travail modulaires disposés selon un plan de référence (PP), les pièces étant positionnées sur des platines supports (202).

9) Installation selon l'une quelconque des revendications précédentes, caractérisée en ce que l'installation d'assemblage automatique (200) comprend :
- un poste de dépose (205) de la douille équipée (1),
- un poste de graissage (210),
- un poste de dépose (215) de l'équerre (5) sur la douille (1),
- un poste de contrôle (220) de la position de l'équerre (5) sur la douille (1),

- des postes de rivetage (230, 240), de l'une des branches de l'équerre (5) sur la douille (1),
- un poste de retournement (250) des pièces,
- un poste de décambrage (260) de l'équerre (5),
- des postes de rivetage (270, 280), de l'autre branche de l'équerre (5) sur la douille (1),
- des postes de contrôle des rivetages (245, 290).
- un poste d'évacuation (40) des douilles-équerres assemblées.

10) Installation selon la revendication 9, caractérisée en ce que sont prévus dans l'installation de l'assemblage automatique (200) des rehausses (261, 271, 281) de mise à niveau des pièces, à commande commune.

11) Installation selon l'une quelconque des revendications précédentes, caractérisée en ce que latéralement à l'installation d'assemblage automatique (200) est placé un poste de distribution des équerres (5) comprenant deux chargeurs (41, 42), l'un pour les équerres droites et l'autre pour les équerres gauches, et un tiroir central de distribution unique (43).

12) Installation selon l'une quelconque des revendications précédentes, caractérisée en ce que toutes les platines supports (202) de l'installation d'assemblage (200) sont identiques et que chaque platine (202) comporte un ensemble de gorges permettant indifféremment le positionnement de pièces droites ou de pièces gauches.

13) Installation selon la revendication 12, caractérisée en ce que la platine (202) comporte un premier agencement de positionnement des pièces, grâce auquel la grande branche de l'équerre (5) est horizontale et un second agencement de positionnement des pièces, grâce auquel la petite branche de l'équerre (5) est horizontale, la douille 1 étant positionnée en correspondance avec l'équerre 5.

# FIG.1

FIG.2

# FIG.3

FIG.4A

FIG.4B

## FIG.5 A

EP 0 404 616 A1

## FIG.5B

FIG.6A

FIG.6B

R1

5

202

1.1

1.2

## FIG.7A

1D

5D

1.1

D

D

202

1G

5G

## FIG.7B

## FIG.8A

5

R2   R3

1.2

202

1.3

1.1

5D

D

D

202

5G

## FIG.8B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 001 070 (SIEGENIA-FRANK) <br> * Figure 2; page 15, lignes 1-7 * <br> --- | 1 | E 05 D  15/52 <br> B 23 P  21/00 |
| A | EP-A-0 025 879 (GRETSCH) <br> * Figure 1; résumé * <br> --- | 1 | |
| A | ZEITSCHRIFT FÜR WIRTSCHAFTLICHE FERTIGUNG UND AUTOMATISIERUNG, vol. 81, no. 9, septembre 1986, pages 497-503, Munich, DE; M. STEUDEL: "Vollautomatisches Montage-System für eine elektromechanische Produktfamilie" <br> * Page 500, paragraphe 2.2; figure 5 * <br> --- | 1 | |
| A | FR-A-2 589 933 (FERCO) <br> * Résumé; figure 1 * <br> ----- | 1 | |

DOMAINES TECHNIQUES
RECHERCHES (Int. Cl.5)

E 05 D
B 23 P

Le présent rapport a été établi pour toutes les revendications

| Lieu de la recherche | Date d'achèvement de la recherche | Examinateur |
|---|---|---|
| LA HAYE | 23-07-1990 | GUILLAUME G.E.P. |